# EUROPÄISCHE PATENTSCHRIFT

(11) **EP 1 042 835 B1**
(45) Veröffentlichungstag und Bekanntmachung des Hinweises auf die Patenterteilung: **10.09.2003**
(21) Anmeldenummer: 98966402.4
(22) Anmeldetag: 23.12.1998
(51) Int. Cl.: H01M 8/00

(54) **BRENNSTOFFZELLENEINHEIT**
FUEL CELL UNIT
UNITE DE PILE A COMBUSTIBLE

(30) Priorität: 28.12.1997 DE 19757786
(43) Veröffentlichungstag der Anmeldung: 11.10.2000
(60) Teilanmeldung: 01122602.4
(73) Patentinhaber: Rennebeck, Klaus, 73240 Wendlingen (DE)
(72) Erfinder: Rennebeck, Klaus, 73240 Wendlingen (DE)
(74) Vertreter: Patentanwälte Hosenthien-Held und Dr. Held
(86) Internationale Anmeldenummer: EP9808432
(87) Internationale Veröffentlichungsnummer: WO99034464

(56) Entgegenhaltungen:
- WO-A-87/01516
- US-A- 3 228 797
- US-A- 3 476 602
- US-A- 4 420 544

## Beschreibung

Die vorliegende Erfindung betrifft eine Brennstoffzelleneinheit zur Gleichstromerzeugung durch Umwandlung chemischer Energie mit einem Elektrolyten, welcher getrennt voneinander Anode und Kathode trägt. Die Erfindung betrifft darüber hinaus einen Brennstoffzellenstack, der aus mehreren derartigen Brennstoffzelleneinheiten zusammen-gesetzt ist sowie die Verwendung einer derartigen Brennstoff zelleneinheit.

Brennstoffzellen dienen, wie dies allgemein bekannt ist, der Stromerzeugung, genauer ausgedrückt, der Umwandlung von chemischer in elektrische Energie. Dabei werden an der Anode unter Freisetzung von Wasserstoffionen Elektronen abgegeben, die die Anode negativ aufladen. Somit finden an den Feststoffelektrolyten-Oberflächenschichten zwei Reaktionen statt, jeweils eine an der Anode und an der Kathode, welche zusammen das Prinzip der Brennstoffzellenreaktion darstellen. Aus der Anode (Pluspol) wird der Elektrodenstrom über einen Stromverbraucher zu der Kathode (Minuspol) geleitet. Gleichzeitig mit der Erzeugung des Elektronenflusses von der Anode zur Kathode findet die Emission des Reaktionsproduktes, beispielsweise von Wasser bzw. Wasserdampf (Aquadestillata- oder Kondensat-Emission), aus der Brennstoffzelle statt. Für den Betrieb einer Brennstoffzelle wird eine Versorgung mit Brennstoff bzw. Betriebsstöff benötigt, der beispielsweise aus Wasserstoff oder einem Wasserstoffträger bestehen kann. Der Brennstoff muß zur katalytischen Anode, der Sauerstoff oder Sauerstoffträger, d.h. das Oxidationsmittel, zur Oberfläche der Kathode, die durch den Elektrolyten von der Anode getrennt ist, befördert werden. Bei einem Ideal-Elektrolyten einer Brennstoffzelle findet eine Stromerzeugung bei einer Spannung von 1,23 Volt statt.

Ein Beispiel einer Brennstoffzelle, bei der Anode und Kathode plattenförmig ausgebildet und beiderseits eines ebenfalls plattenförmigen Elektrolyten angeordnet sind, ist in der US-A-5 418 079 offenbart. Derartige plattenförmige Elektrolyten haben den Nachteil, eine relativ große Dicke aufweisen zu müssen, um eine ausreichende Stabilität für die Handhabung zu gewährleisten. Da sich jedoch mit der Zunahme der Elektolytdicke auch der Diffusionsweg der Ionen verlängert, was zu einer erhöhten Anspringtemperatur der Brennstoffzelle führt, sind derartige Plattenelektrolyten nur bedingt für den Einsatz in Brennstoffzellen geeignet. Zudem weisen derartige Brennstoffzellen bei einem vorgegebenen Volumen nur eine geringe aktive Oberfläche für die elektrochemische Reaktion auf.

Der vorliegenden Erfindung liegt demzufolge die Aufgabe zugrunde, eine Brennstoffzelleneinheit anzugeben, die auf kleinstmöglichem Raum eine große reaktive Oberfläche aufweist, die einfach herzustellen ist und bezüglich ihrer Verwendung eine hohe Flexibilität aufweist.

Diese Aufgabe wird erfindungsgemäß durch eine Brennstoffzelleneinheit nach Anspruch 1 sowie durch einen Brennstoffzellenstack, der aus mehreren derartigen Brennstoffzelleneinheiten zusammengesetzt ist, gelöst.

Die erfindungsgemäße Brennstoffzelleneinheit zur Gleichstromerzeugung durch Umwandlung chemischer Energie mit einem Elektrolyten, welcher getrennt voneinander Anode und Kathode trägt, weist demzufolge einen Mikrohohlfaser-Matrixelektrolyten auf, dessen inneren bzw. äußeren Oberflächen als Anode oder Kathode aktiviert sind, wobei die Mikrohohlfasern eine Wandstärke von etwa 0,01 bis 50 µm und einen gleichwertigen Außendurchmesser von etwa 0,05 bis 280 µm aufweisen, wobei die Mikrohohlfasern entweder in Form von Filament- oder Filamentgarngelegen angeordnet sind, wobei die Mikrohohlfaserenden formstabil gebunden sind und für den Zugang zum Hohlfaserlumen zumindest partiell freigelegt sind, oder in Form von Stapelfaser- oder Stapelfasergarngelegen angeordnet sind, wobei die Mikrohohlfaserenden formstabil gebunden sind, wobei die Gelege in Form einer Diskusscheibe angeordnet sind, wobei die Mikrohohlfaserenden so eingebunden sind, daß ein stabiler, selbsttragender Diskusscheibenring gebildet ist, an dessen äußerer ringförmiger Umfangsfläche die offenen Mikrohohlfaserenden freiliegen oder wobei die Gelege in Form eines Vielecks, insbesondere eines Rechtecks, angeordnet sind, wobei die Mikrohohlfaserenden so eingebunden sind, daß ein stabiler, selbsttragender, vieleckiger, insbesondere rechteckiger, Rahmen gebildet ist, an dessen äußerer Umfangsfläche die offenen Mikrohohlfaserenden freiliegen.

Durch die erfindungsgemäße Brennstoffzelleneinheit läßt sich bei kleinem Raumbedarf eine hohe aktive Fläche, beispielsweise etwa 11.000 cm² pro cm³ Brennstoffzellenvolumen, erreichen. Unter einem gleichwertigen Durchmesser wird, wie dies allgemein bekannt ist, bei geometrischen Gebilden mit lediglich näherungsweise kreisförmigem Querschnitt der Durchmesser desjenigen fiktiven Kreises verstanden, dessen Fläche gleich der Querschnittsfläche des geometrischen Gebildes ist. Im vorliegenden Text werden als Filamentgelege Schichtungen aus Fasern bezeichnet, bei denen mindestens einige der Fasern eine oder mehrere Windungen aufweisen, wohingegen sich die Fasern in Stapelfasergelegen ohne Windungen erstrecken. Garngelege zeichnen sich dadurch aus, daß mehrere Fasern bzw. Filamente miteinander verdrillt sind.

Da der Feststoffelektrolyt erfindungsgemäß als Hohlfaser, d.h. als Kapillar- oder Hohlprofil, ausgebildet ist, lassen sich geringe Wandstärken des Elektrolyten ohne mechanische Stabilitätsprobleme verwirklichen. Ein weiterer Vorteil der vorliegenden Erfindung besteht darin, daß Mikrohohlfasern mit den genannten Abmessungen textile Eigenschaften aufweisen und sich aus diesem Grund leicht verformen lassen, ohne zu zerbrechen. Die inneren und äußeren Oberflächen der Mikrohohlfasern sind für ihre Funktion als Anode oder Kathode aktiviert. Die Art der Aktivierung ist von den jeweiligen für die Mikrohohlfasern gewählten Materialien abhängig. Beispielsweise ist eine Aktivierung durch eine geeignete Beschichtung denkbar.

Die Wandstärke der Mikrohohlfasern liegt vorzugsweise zwischen etwa 0,05 und 10 µm, insbesondere zwischen etwa 0,05 und 5 µm. Dabei liegt der gleichwertige Außendurchmesser der Mikrohohlfasern vorzugsweise zwischen etwa 1 und 100 µm, insbesondere zwischen etwa 2 und 25µm. Die konkrete Auswahl der geeigneten Durchmesser und Wandstärken ist in Abhängigkeit von den verwendeten Materialien zu treffen. Die angegebenen unteren Werte für Wandstärke und Durchmesser sind insbesondere durch die Möglichkeiten der Herstellung bedingt.

Gemäß einer bevorzugten Ausführungsform der Erfindung sind die Gelege in Form einer Diskusscheibe angeordnet, wobei die Mikrohohlfaserenden so eingebunden sind, daß ein stabiler, selbsttragender Diskusscheibenring gebildet ist, an dessen äußerer ringförmiger Umfangsfläche die offenen Mikrohohlfaserenden freiliegen. Die Diskusscheibe kann, im Querschnitt gesehen, eine ebene Scheibe darstellen oder auch in Form einer Wellpappelage ausgebildet sein. Die das Gelege bildenden Mikrohohlfasern weisen vorzugsweise einen gleichwertigen Außendurchmesser von etwa 0,5 µm bis 100 µm sowie eine Länge von vorzugsweise etwa 50 mm bis 1000 mm auf. Auf diese Weise läßt sich in einem Volumen, das etwa 3 bis 5 Stück DIN A 4 Bogen entspricht, eine Elektrolytoberfläche von etwa lm² erreichen.

Da die Mikrohohlfasern an beiden Enden offen sind, entspricht ihre Länge der Länge des Lumens bzw. Kanals, auf dessen Innenoberfläche entweder die Anode oder Kathode aufgebracht ist. Besonders bevorzugt wird eine Länge von etwa 300 mm. Die gewählte Länge der Mikrohohlfasern entspricht bevorzugt dem Durchmesser des Diskusscheibenringes. Die Mikrohohlfaserlänge kann auch durch Umlegen bzw. Biegen der Mikrohohlfaser ein Vielfaches des Diskusscheibendurchmessers betragen. Für die Dicke des Ringes haben sich Werte zwischen etwa 1 mm und 35 mm als besonders geeignet erwiesen, damit die Funktion des Diskusscheibenringes als Formstabilisator erfüllt wird. Die Höhe des Diskusscheibenringes beträgt vorzugsweise etwa 0,5 mm bis 15 mm. Diese Höhe ist ausreichend, um mehrere Mikrohohlfaserlagen übereinander aufzunehmen. Ein derartiger Ring ist für einen Stack aus mehreren Brennstoffzelleneinheiten geeignet.

Alternativ dazu können die Gelege auch in Form eines Vielecks, insbesondere eines Rechtecks, angeordnet sein, wobei die Hohlfaserenden so eingebunden sind, daß ein stabiler, selbsttragender, vieleckiger, insbesondere rechteckiger, Rahmen gebildet ist, an dessen äußerer Umfangsfläche die offenen Mikrohohlfaserenden freiliegen. Die einzelnen Mikrohohlfasern können in diesem Fall entweder parallel zueinander oder über Kreuz angeordnet sein, wobei die Länge der Mikrohohlfasern vorzugsweise etwa der Länge bzw. Breite des Rahmens entspricht.

Vorzugsweise sind die Mikrohohlfasern aus Polymermaterialien, Metall, Keramik und/oder textilen Materialien hergestellt. Es können jedoch beliebige andere geeignete Materialien verwendet werden. Dabei können die Materialien sowohl oxidisch als auch nicht oxidisch sein. Falls nicht fluorierte Polymermaterialien fiir die Herstellung der Mikrohohlfasern ausgewählt werden, kann die Aktivierung der Oberfläche beispielsweise durch Sulfonieren erfolgen.

Von besonderem Vorteil haben sich solche Mikrohohlfasem im Rahmen der vorliegenden Erfindung erwiesen, die aus der internationalen Anmeldung WO 97/26225 hervorgehen. Es handelt sich dabei um Mikrohohlfasern aus kermischem Material bzw. den entsprechenden Grünlingen. Wird im Zusammenhang hiermit von einem "keramischen Material" gesprochen, dann ist dieses in weitestem Sinne zu verstehen. Es handelt sich um eine Sammelbezeichnung für aus anorganischen und überwiegend nicht metallischen Verbindungen oder Elementen aufgebauten Materialien, die insbesondere zu mehr als 30 Vol.-% kristallisierte Materialien darstellen. In diesem Zusammenhang sei auf Römpp Chemie Lexikon, 9. Aufl., Band 3, 1990, S. 2193 bis 2195 verwiesen. Vorzugsweise bestehen die Keramikmikrohohlfasern aus einem oxidischen, silicatischen, nitridischen und/oder carbidischen Keramikmaterial. Besonders bevorzugt sind solche Keramikhohlfasern auf der Basis von Aluminiumoxid, Calciumphosphat (Apatit) oder verwandten Phosphaten, Porzellan- oder Cordierit-artigen Zusammensetzungen, Mullit, Titanoxid, Titanaten, Zirkonoxid, Zirkonsilikat, Zirkonaten, Spinellen, Smaragd, Saphir, Korund, Nitriden oder Carbiden von Silicium oder anderen chemischen Elementen oder deren Mischungen. Als Dotierungsmittel werden gegebenenfalls die in der Keramik bekannten Stoffe, wie MgO, CaO, ZrO₂, ZrSiO₄, Y₂O₃ u.a. oder deren Vorläufer den anorganischen Hauptbestandteilen zugesetzt.

Zur Herstellung dieser Mikrohohlfasern wird vorzugsweise eine Emulsion, Dispersion und/oder Supension, die den Vorläufer eines keramischen Materials und ein unter Hitzeeinwirkung entfernbares Bindemittel enthält, in an sich bekannter Weise zu grünen Mikrohohlfasern ausgeformt und das Bindemittel unter Hitzeeinwirkung entfernt. Alternativ kann die Dispersion auf eine Seele aus einer organischen Kompaktfaser aufgebracht werden, wobei anschließend sowohl die Seele als auch die Bindemittel unter Hitzeeinwirkung entfernt werden. Die Dispersion kann wechselnde Mengen, z.b. bis zu 95 Gew.-%, vorzugsweise etwa 40 bis 70 Gew.-%, an Dispersionsmedium enthalten. Ein Dispersionsmedium kann auch entfallen, wenn das Bindemittel z.B. thermoplastisch ist und ohne nennenswerte Zersetzung zu einer niedrig-viskosen Masse aufgeschmolzen werden kann.

Als oben bezeichnete keramische Vorläufer bzw. Precursor kommen insbesondere in Frage: Tonminerale, insbesondere Kaolin, Illit, Montmorillit, Metallhydroxide, wie Aluminiumhydroxid, gemischte Metallhydroxide/-oxide, wie AlOOH, gemischte Metalloxide/halogenide, Metalloxide, wie BeO, MgO, Al₂O₃, ZrO₂ und ThO₂, Metallnitrate, wie Al(NO₃)₃, Metallalkoholate, insbesondere Aluminiumalkoholate, wie Al(iPrO)₃, Al(*sec*-BuO)₃, Magnesium-Alumosilicate, Feldspäte, Zeolithe, Böhmrite oder Mischungen zweier oder mehrerer der genannten Materialien.

Bei der Wahl des unter Hitzeeinwirkung entfernbaren Bindemittels besteht im Rahmen der Erfindung keine kritische Beschränkung. Es ist allerdings bevorzugt, daß das Bindemittel filmbildend ist. Dabei kann es sich beispielsweise um Harnstoff, Polyvinylalkohol, Wachs. Gelatine, Agar, Eiweiß, Saccharide handeln. Gegebenenfalls können zusätzlich organische Hilfsmittel, wie Binder, Stellmittel, Entschäumer und Konservierer herangezogen werden. Die Mischung aus dem Vorläufer des keramischen Materials und dem unter unter Hitzeeinwirkung entfernbaren Bindemittel liegt in Form einer Dispersion vor, wobei dieser Begriff weitgefaßt zu sehen ist. Es kann sich dabei insbesondere um Emulsionen und Suspensionen handeln, die regelmäßig in Form einer Paste vorliegen. Bei der Wahl des Dispersionsmediums besteht weitgehende Freiheit. Im allgemeinen wird es Wasser sein. Denkbar ist jedoch auch als Flüssigkeit ein organisches Lösungsmittel, wie ein Alkohol oder Aceton, gegebenenfalls auch in Vermischung mit Wasser. Besonders vorteilhaft sind hier sogenannte Sol-Gel-Prozesse, z.B. auf der Basis des bereits angesprochenen Polyvinylalkohols.

Hervorzuheben ist, daß bereits der oben angesprochene Grünling der Mikrohohlfaser grundsätzlich ebenfalls im Rahmen der vorliegenden Erfindung eingesetzt werden kann. Insbesondere ist es hierbei vorteilhaft, den Grünling der Mikrohohlfaser nachträglich zu sulfonieren. Dies hat zur Folge, daß die wünschenswerte Protonenleitfähigkeit verbessert wird.

Zur Herstellung der oben bezeichneten Mikrohohlfasern wie auch der entsprechenden Grünlinge wird inbesondere im Rahmen eines Spinnverfahrens so vorgegangen, daß die Dispersion in einen Aufgabebehälter oder Druckgefäß einer Spinnvorrichtung gegeben, die Dispersion strömend bei einer Temperatur von etwa 20 bis 400°C durch die Spinnvorrichtung gefördert und durch Düsenringöffnungen oder Düsenprofilöffnungen gepreßt wird. Die im Bereich der Düsenöffnungen erzeugten Teilströme werden mittig durch Kerne oder durch Einrichtungen zum Einblasen eines Gases geteilt, und die Teilströme werden durch Erwärmen, durch Bestrahlen oder durch Zutritt eines Reaktionspartners zu grünen Mikrohohlfasern verfestigt und dann gegebenenfalls zu dichten Mikrohohlfasern gebrannt. Weitere Einzelheiten gehen aus der bereits erwähnten internationalen Anmeldung WO 97/26225 hervor.

Es ist außerdem möglich, die Haare des Fells solcher Tierarten als Mikrohohlfasern zu verwenden, deren Fellhaare ein inneres Lumen aufweisen. Die Fellhaare weisen aufgrund ihrer Eiweißbestandteile eine hohe Protonenleitfähigkeit auf und sind deshalb für die erfindungsgemäße Brennstoffzelleneinheit geeignet.

In Abhängigkeit von der beabsichtigten Anwendung sowie dem beabsichtigten Brennstoffeinsatz kann die Brennstoffzelleneinheit als PEM-, DM- und SO-Brennstoffzelleneinheit vorliegen. Wie dies bekannt ist, stehen die Abkürzungen "PEM", "DM" und "SO" jeweils fiir die Ausdrücke "Proton Exchange Membrane", "Direct Membrane" und "Solid Oxide". Für PEM-Brennstoffzelleneinheiten eignen sich insbesondere die polymeren Grünlinge der Mikrohohlfasern, wohingegen die Mikrohohlfasern in gebranntem Zustand besonders für die Herstellung von SO-Brennstoffzelleneinheiten geeignet sind. Als Ausgangsmaterial für Hochtemperatur-Brennstoffzellen kann Zirkoniumdioxid und insbesondere Zirkonium, da dieses Metall ein hohes Absorptionsvermögen für Wasser aufweist, empfohlen werden. Des weiteren haben sich die Materialien PEEK (Polyetheretherketon) sowie Victrex® im Rahmen des Einsatzes gemäß der vorliegenden Erfindung bewährt. Durch eine geeignete Materialauswahl läßt sich somit jede beliebige Art von Brennstoffzelle herstellen.

Die Anode kann sowohl an den Lumeninnenflächen der Mikrohohlfasem als auch an den Außenumfangsoberflächen der Mikrohohlfasern angebracht sein. Es wird jedoch aus anwendungstechnischen Gründen, auf die später noch näher eingegangen werden wird, bevorzugt, daß sich die Anode auf dem Außenumfang des Elektrolyten und die Kathode an der Lumeninnenoberfläche der jeweiligen Mikrohohlfaser befinden.

Gemäß einer besonders bevorzugten Ausführungsform ist die Brennstoffzelleneinheit mit einem Mikrowellenabschirmkäfig versehen. Dieser dient dazu, die Strahlen einer Mikrowellenheizung abzuschirmen. welche häufig dafür verwendet wird, die Brennstoffzelle auf ihre Anspringtemperatur, d.h. die Temperatur, bei der die elektrochemische Reaktion stattfindet, aufzuheizen.

Um Kurzschlüsse zwischen den einzelnen den Matrixelektrolyten bildenden Mikrohohlfasern zu vermeiden, kann ein Kurzschlußschutz in Form von Wendelfasern mit nicht aktivierter Oberfläche vorgesehen sein, die die Mikrohohlfasern umschlingen und mit deren Enden fest verbunden sind.

Die erfindungsgemäßen Brennstoffzelleneinheiten können zu einem Brennstoffzellenstack zusammengesetzt sein, wodurch sich die Leistung der einzelnen Brennstoffzelleneinheiten nahezu beliebig vervielfachen läßt. In einem derartigen Stack können die einzelnen Brennstoffzelleneinheinten so eingebettet bzw. vergossen sein, daß ein stabiler, selbsttragender Rahmen gebildet wird. Dieser Rahmen kann in beliebiger Form ausgeführt sein, beispielsweise als Diskusscheibenring, wie bereits vorstehend erläutert.

Die einzelnen Brennstoffzelleneinheiten des erfindungsgemäßen Brennstoffzellenstacks können wellenförmig oder stegplattenförmig ausgebildet sein. In dieser Ausgestaltung lassen sich die einzelnen Brennstoffzelleneinheiten leicht aufeinandersetzen.

Der erfindungsgemäße Brennstoffzellenstack kann mindestens eine Brennstoffzelleneinheit mit nicht aktivierten Elektrodenoberflächen als Wärmetauscher und/oder Luftfilter aufweisen. Hierin ist ein besonderer Vorteil der erfindungsgemäßen Ausgestaltung der Brennstoffzelleneinheit mit einem Matrix-Elektrolyten aus Mikrohohlfasern zu sehen. Die Wärmetauscher und/oder Luftfilter können nämlich aus stoff- und morphologiegleichen Matrix-Elektrolyt-Filamenten bestehen, mit dem einzigen Unterschied, daß ihre Oberflächen nicht aktiviert sind, so daß die zur Stromerzeugung gewünschte chemische Reaktion auf ihnen nicht stattfinden kann. Die erfindungsgemäße Brennstoffzelleneinheit bzw. der Brennstoffzellenstack kann auf diese Weise besonders einfach und in wenigen Schritten hergestellt werden, wobei mehrere Elemente (Brennstoffzelleneinheiten, Wärmetauscher, Luftfilter usw.) zunächst als identische Elemente hergestellt werden und anschließend durch eine gezielte Aktivierung einzelner Mikrohohlfasern eine Aufteilung der Funktionen vorgenommen werden kann.

Die erfindungsgemäßen Matrix-Elektrolyten aus Mikrohohlfasern können durch Verzwimen (beispielsweise Seilen oder Klöppeln) zu den jeweiligen Brennstoff-Einzelzellen verarbeitet werden. Die Mikrohohlfasern mit nicht aktivierter Oberfläche, die als Wärmetauscher und/oder Luftfilter dienen, werden vorzugsweise auf die als Elektrolyten fungierenden Mikrohohlfasern elektrisch isoliert so aufgebracht, daß sie diese letzteren wendelförmig umschlingen. Die isolierte Wendelumschlingung ist dabei vorzugs-weise an den Matrixenden der Brennstoff-Einzelzellen mit den als Elektrolyten dienenden Mikrohohlfasern fest und unlösbar verbunden, wobei die Anodenflächen nicht verkleinert wird. Auf diese Weise bleibt die Außenoberfläche der als Elektrolyten dienenden Mikrohohlfasern der Matrix frei für den Brennstoffzutritt. Gleichzeitig fungiert die isolierte Wendel als textiler Kontakt- und Berührungsschutz für die Außenoberflächen der Hohlfasern des Matrixelektrolyten. Aus den Miniatur-Brennstoff-Einzelzellen lassen sich in Gelegen und Stapeln Serienschaltungen herstellen.

Zur Ausbildung der Brennstoffzellenstacks können die einzelnen Mikrohohlfasern regellos oder nach einem Schema als Gelege zu einem Flächengebilde ausgestaltet werden. Es ist möglich, daß ganze Stacks als Wärmetauscher verwendet werden, wobei dann die Mikrohohlfasern dieser Stacks keine aktivierten Oberflächen aufweisen. Durch Stapeln der einzelnen Stacks können diese zu stabilen Modulen verarbeitet werden, wobei sich Stacks mit aktivierten und Stacks mit nicht aktivierten Mikrohohlfasern abwechseln können. Die nicht aktivierten Stacks können des weiteren die Funktionen eines Kühlers, Rekuperators für den Brennstoff oder eines Vorwärmers erfüllen. Wenn die einzelnen Brennstoffzellenstacks eine Diskusscheibenform aufweisen, so entstehen durch die Stapelung leicht handhabbare Betriebszylinder.

Für den Betrieb als Brennstoffzelle haben sich Mikrohohlfasern mit Wandstärken zwischen etwa 0,05 µm und 40 µm und mit einem Außendurchmesser von etwa 0,1 µm bis etwa 50 µm als besonders geeignet erwiesen. In Einzelfällen kann der Lumendurchmesser auch bis zu 100 µm betragen. Zum Erreichen dieser geringen Durchmesser und Wandstärken ist vorzugsweise das vorstehend beschriebene Herstellungsverfahren anzuwenden.

Bei der Verwendung der erfindungsgemäßen Brennstoffzelleneinheit bzw. des erfindungsgemäßen Brennstoffzellenstacks zur Gleichstromerzeugung durch Umwandlung der bei der Oxidation eines Brennstoffes freigesetzten chemischen Energie werden die Stoffströme des Brennstoffes und des Oxidationsmittels vorzugsweise kreuzstromförmig geführt. Dies bedeutet, daß einer der Stoffströme senkrecht zur Ebene des Filament- oder Stapelfasergeleges und der andere parallel zu dieser Ebene geführt wird. Dies steht im Gegensatz zum Betrieb der bisher bekannten Brennstoffzellen, bei denen die Elektrolyten entweder plattenförmig oder als ebene Folien ausgeführt sind und dementsprechend die Stoffströme des Brennstoffes und des Oxidationsmittels parallel oder entgegengesetzt parallel entlang den Plattenebenen geführt werden. Diese Anordnung führt bei den bekannten Brennstoffzellen zu dem Nachteil, daß z.B. die Konzentration des Sauerstoffs im Oxidationsmittel geringer wird, je weiter der zurückgelegte Weg des Oxidationsmittels entlang der Plattenebene ist. Im Gegensatz hierzu kann bei der Verwendung der erfindungsgemäßen Brennstoffzelleneinheit bzw. des Brennstoffzellenstacks das Oxidationsmittel durch die Kreuzstrom-Betriebsweise in beide Enden der jeweiligen Mikrohohlfasern eingeleitet werden. Dies bedeutet, daß entlang der gesamten Mikrohohlfaserlänge eine im wesentlichen konstante Sauerstoffkonzentration vorliegt, wodurch die Leistung der Brennstoffzelleneinheit konstantgehalten werden kann.

Wasserstoffhaltige Brennstoffe haben sich für den Betrieb des erfindungsgemäßen Brennstoffzellenstacks aufgrund ihrer hohen Reaktivität als besonders geeignet erwiesen.

Die Reaktionsprodukte werden vorzugsweise zum Konditionieren, Heizen, Kühlen und/oder Befeuchten der Brennstoffzelleneinheit oder anderer nachfolgender Sequenzen benutzt. Bei der nachfolgenden Sequenz kann es sich z.B. um eine nachgeschaltete Brennstoffzelleneinheit oder um ein von der Brennstoffzelle unabhängiges Element handeln. Auf diese Weise wird der Brennstoff mehrfach ausgenutzt, und es läßt sich eine besonders sparsame Verfahrensführung verwirklichen. Im Sinne der Mehrfachnutzung des Brennstoffes kann das Reaktionsprodukt der Oxidation, beispielsweise Wasser, auch fiir die Weiterverwendung in einer Klimaanlage, beispielsweise in einem Kraftfahrzeug, genutzt werden.

Für den Eintritt der Brennstoffzellenreaktion wird im allgemeinen eine erhöhte Temperatur benötigt, die auch als Anspringtemperatur der Brennstoffzelle bezeichnet wird. Diese Anspringtemperatur kann erfindungsgemäß mittels Durchfluß von Heizmedien durch den Brenntstoffzellenstack in einem der Zweige der Kreuzströme erreicht werden. Bei den Heizmedien kann es sich beispielsweise um die Produkte der elektrochemischen Reaktion handeln.

Die Elektrolyt-Anspringtemperatur kann durch Erhitzen des Brennstoffes und/oder des Oxidationsmittels vor dem Einleiten derselben in die Brennstoffzelleneinheit erreicht werden. Die zum Erhitzen des Brennstoffes und/oder des Oxidationsmittels benötigte Wärme kann dabei beispielsweise durch Wässerung von Zeolith erhalten werden. Wie dies bekannt ist, erhitzen sich Zeolithe bei Wasseraufnahme auf eine Temperatur von +70°C bis +370°C. Die Zeolith-Wässerung kann wiederum vorzugsweise mit den Produkten der elektrochemischen Reaktion (Aquadestillata) stattfinden.

Die Elektrolyt-Anspringtemperatur kann auch durch Wässerung von Metallhydrid, insbesondere Eisen-, Titan-, Magnesiumhydrid, erreicht werden. Auch fiir diese Wässerung kann selbstverständlich das Endprodukt der elektrochemischen Reaktion verwendet werden.

Des weiteren ist es möglich, die Anspringtemperatur durch direktes oder indirektes Umwälzen von Metall-oder Bariumhydroxid-Schmelzen zu erreichen. Bariumhydroxid ist in diesem Zusammenhang besonders geeignet, da es bereits bei etwa 78°C flüssig ist und somit im gewünschten Temperaturbereich als Flüssigkeit umgewälzt werden kann. Die Metallschmelze oder Bariumhydroxidschmelze muß selbstverständlich getrennt von den Stoffströmen des Brennstoffes und des Oxidationsmittels geführt werden.

Die Elektrolyt-Anspringtemperatur läßt sich auch durch Bestrahlen der Brennstoffzelleneinheit mit Mikrowellen erreichen. In diesem Fall müssen die Brenn-stoffzelle bzw. der Brennstoffzellenstack und das Gehäuse mikrowellendurchlässig ausge-führt sein, wobei die gesamte Einheit in einen Mikrowellenabschirmkäfig zu integrieren ist, der aus Gründen der Gewichtsersparnis vorzugsweise in Leichtbauweise ausgeführt ist. Diese Form der Erwärmung läßt sich auch in Kombination mit einem der anderen genannten Heizverfahren anwenden. Alle genannten Heizverfahren weisen den Vorteil auf, daß sie drucklos ausgeführt werden können, was in konstruktionstechnischer Hinsicht von Vorteil ist.

Ein Brennstoffzellenschnellstart kann auch durch einen atmosphärischen Katalysatorenbrenner, d.h. einen Gas-Flüssigheizbrenner, verwirklicht werden. Es ist auch möglich, den Katalysatorenbrenner in Kombination mit einem oder mehreren der vorstehend genannten Verfahren für die Temperierung der Brennstoffzelle bzw. des Brennstoffzellenstacks einzusetzen.

Je nach Art der Aktivierung der Katalysatoroberfläche kann diese sowohl vor dem Einbau bzw. dem Zusammenbau des Brennstoffzellenstacks stattfinden als auch nach Inbetriebnahme der Brennstoffzelle, beispielsweise zur Nachbesserung. Die Außen- bzw. Innenoberflächen der Mikrohohlfaserlumen können auch wechselweise als Kathode oder Anode fungieren.

Die Brennstoffeinspritzung erfolgt vorzugsweise über Düsen, deren Öffnungen als Mikrohohlfaserlumen ausgebildet sind, die einen Durchmesser von 0,1 µm bis 100 µm aufweisen und in Guß- oder Spritzgußteilen der Düse verloren eingebracht sind. Auf diese Weise ist eine besonders genaue Dosierung des Brennstoffes sowie eine äußerst feine Verteilung desselben möglich.

Die Brennstoffeinspritzdüse, deren Öffnungen als Mikrohohlfaserlumen ausgebildet sind, die einen Durchmesser von 0,1 µm bis 100 µm aufweisen und in Guß- oder Spritzgußteilen der Düse verloren eingebracht sind, stellt eine wesentliche Verbesserung der bisher bekannten Brennstoffeinspritzdüsen dar. Es ist möglich, diese Düse mit einer Schwankungsbreite des Außendurchmessers von lediglich etwa ± 6% durch das vorstehend beschriebene Verfahren herzustellen. Düsen mit Öffnungen der genannten Abmessungen und der angegebenen Präzision können jedoch nicht, wie dies üblich ist, durch Herstellen einer Lochung in einem Metallrohling mittels Laserbestrahlung hergestellt werden, da dieses Verfahren mit einer hohen Ungenauigkeit behaftet ist. Vielmehr werden zur Bildung des Düsenloches erfindungsgemäß Mikrohohlfasern in den Düsen-Spritzformteilen bzw. den Düsen-Gußformteilen vor deren Befüllung mit dem eigentlichen Düsenmaterial, z.B. Metall, verloren eingebracht. Die Öffnungen, die als Düsen wirken, können beispielsweise mit Hilfe von Mikrodraht, z.B. Wolfram-Glühbirnendraht, nach der Ausformung der Mikrohohlfasern in diese eingebracht werden. Hierbei wird der Draht aus dem Stangenpreßprofil herausgezogen und bildet so das Einspritzlumen.

Die Erfindung wird nachstehend anhand der beigefügten Zeichnungen näher erläutert, welche als nicht beschränkendes Beispiel gegeben sind. In den Zeichnungen zeigen:
Figur 1 eine Draufsicht auf eine erste Ausführungsform eines erfindungsgemäßen Brennstoffzellenstacks;
Figur 1a eine Querschnittsansicht von Figur 1;
Figur 2 eine perspektivische Darstellung einer zweiten Ausführungsform eines erfindungsgemäßen Brennstoffzellenstacks;
Figur 3 eine schematische Darstellung des Brennstoffzellenstacks von Figur 2, in der insbesondere die Schaltung des erfindungsgemäßen Brennstoffzellenstacks gezeigt ist; und
Figur 3a eine Querschnittsansicht von Figur 3 im Aufriß.

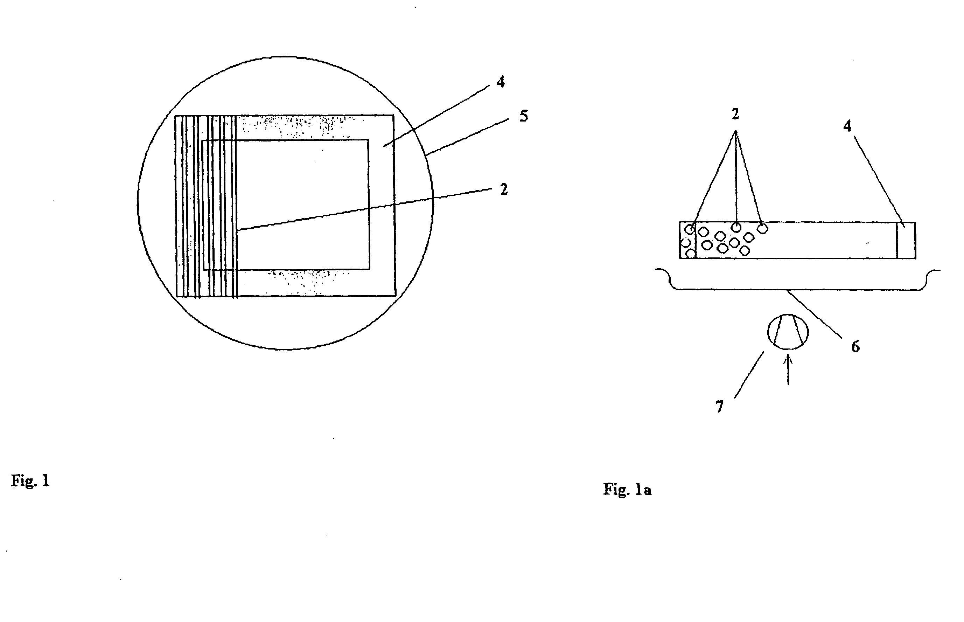

In Figur 1 ist ein erfindungsgemäßer Brennstoffzellenstack, der in seiner Gesamtheit mit dem Bezugszeichen 1 gekennzeichnet ist, dargestellt. Der Brennstoffzellenstack 1 ist aus Mikrohohlfasern 2 zusammengesetzt, welche die Elektrolyten bilden und als Filamentoder Stapelfasergelege regellos oder nach einem festen Schema zu einem Flächengebilde geformt sind. Der Feststoffelektrolyt liegt somit in Form einer Matrix vor.

Die Enden 3 der einzelnen Mikrohohlfasern sind offen und liegen am Außenumfang eines Rahmens 4, der hier als Rechteckrahmen ausgebildet ist, frei. Der Rahmen 4 dient der Formstabilisierung und ist vorzugsweise aus elektrisch isolierender Vergußmasse hergestellt. In diesem Fall können die Enden 3 der Mikrohohlfasern 2 bei der Herstellung des Brennstoffzellenstacks in den Rahmen eingegossen werden. Es ist jedoch auch jede beliebige andere Art der Einbettung der Mikrohohlfasern 2 in den Rahmen 4 denkbar, so auch beispielsweise eine lediglich lose Einbettung.

Die erfindungsgemäßen Brennstoffzellenstacks der in Figur 1 gezeigten Ausführungsform können gestapelt werden, so daß ein kompakter, stabiler Brennstoffzellenquader entsteht. Um die einzelnen Stacks oder Stackstapel herum ist ein Gehäuse 5 vorgesehen, welches in Abhängigkeit von der mechanischen, thermischen oder chemischen bzw. verfahrenstechnischen Beanspruchung der einzelnen Komponenten beispielsweise aus Kunststoff, Metall, Glas oder Keramik hergestellt sein kann. Wenn zur Beheizung der Brennstoffzelle Mikrowellenstrahlung verwendet wird, sollte fiir das Gehäuse ein für diese Strahlungsart durchlässiges Material verwendet werden. In diesem Fall ist zum Schutz der Bedienungsperson bzw. des Verwenders um die gesamte Vorrichtung einschließlich der Mikrowellenheizung ein Abschirmkäfig anzubringen. Vorzugsweise ist das Gehäuse aus einem dielektrischen Material gefertigt, so daß eine elektrische Isolation des Brennstoffzellenstacks gewährleistet ist.

Der erfindungsgemäße Brennstoffzellenstack kann sowohl in Über- als auch in Unterdruckbetriebsweise betrieben werden. Im ersteren Fall muß das Gehäuse 5 für den jeweiligen Druck geeignet konstruiert werden. Hier haben sich beispielsweise zylindrische Druckgehäuse als besonders vorteilhaft erwiesen.

Figur 1a zeigt die Ausführungsform von Figur 1 im Querschnitt. In der dargestellten Ausführungsform sind die Mikrohohlfasern 2 parallel in eine Richtung angeordnet (in den Figuren 1 und 1a sind aus Gründen der Deutlichkeit nur einige der Mikrohohlfasern 2 dargestellt). Wie vorstehend bereits erwähnt, können sie jedoch auch kreuzweise zueinander angeordnet werden. Der Boden 6 des Gehäuses 5 kann beispielsweise als Klöpperboden ausgeführt sein, um den erhöhten Druckbedingungen standzuhalten. Für den Druckbetrieb wird des weiteren ein Kompressor 7 benötigt, der in Figur 1a symbolisch dargestellt ist.

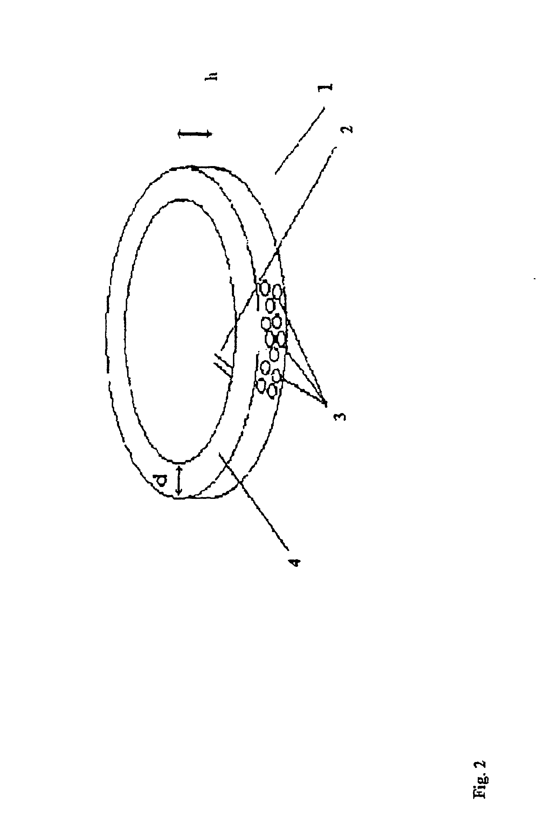

In Figur 2 ist eine weitere Ausführungsform eines erfindungsgemäßen Brennstoffzellenstacks 1 dargestellt, bei der der Rahmen 4 in Form eines Diskusscheibenrings vorliegt. Die Mikrohohlfasern 2, von denen in Figur 2 aus Gründen der Deutlichkeit nur eine einzelne teilweise dargestellt ist, verlaufen entlang dem Durchmesser der Diskusscheibe, wobei die Hohlfaserenden 3 am seitlichen Umfang des Ringes freiliegen.

Als Beispiel für die Dimensionierung eines derartigen Stacks können folgende Werte angegeben werden:

| | |
|---|---|
| -Durchmesser des Diskusscheibenringes | 230 mm |
| -Höhe h des Diskusscheibenringes | 5 mm |
| -Dicke d des Diskusscheibenringes | 35 mm |
| -Außendurchmesser der Mikrohohlfasern | 10 µm |

Die aktive Oberfläche der Mikrohohlfasern kann insbesondere aus Molekularsieb-, Aktivkohle-, Graphit-, Alumosilikat-, Zeolith- oder spongiösen Materialien sowie Elementen und Verbindungen der 8. Nebengruppe hergestellt sein.

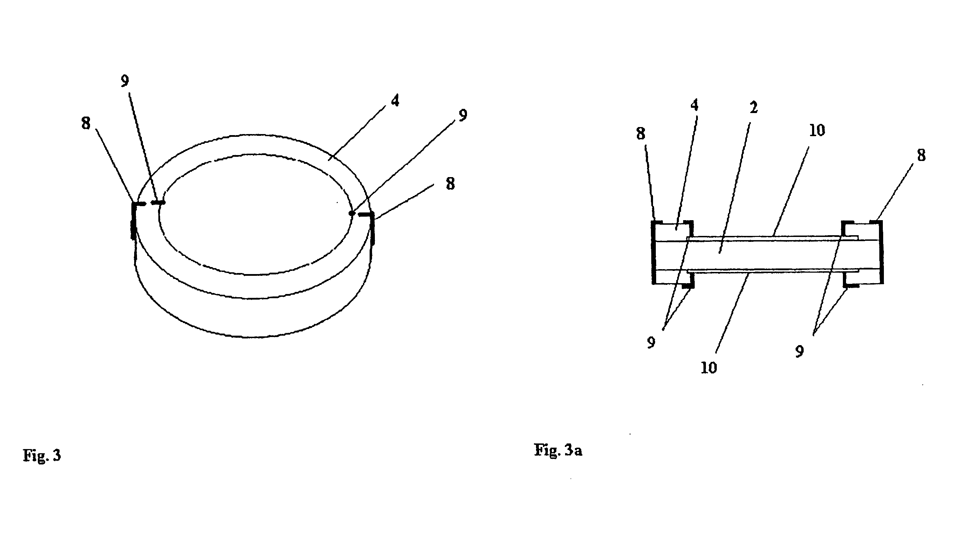

Figur 3 zeigt in perspektivischer Darstellung einen Brennstoffzellenstack 1 mit einem Rahmen 4 in Form eines Diskusscheibenringes, wie er in Figur 2 gezeigt ist. In dieser Darstellung ist zu erkennen, wie die beiden Elektroden 8, 9 des Brennstoffzellenstacks an dem dielektrischen Rahmen 4 angeordnet sein können. Gemäß der gezeigten Anbringung der Elektroden kann durch Nebeneinandersetzen mehrerer Brennstoffzellenstacks eine Serienschaltung, durch Übereinanderstapeln derselben eine Parallelschaltung verwirklicht werden.

Figur 3a zeigt den Brennstoffzellenstack von Figur 3 im Querschnitt, wobei zur Verbesserung der Deutlichkeit der Darstellung lediglich eine Mikrohohlfaser 2 dargestellt ist, die sich in den Rahmen 4 hinein erstreckt. Auf der Außenoberfläche der Mikro-hohlfaser 2 befindet sich eine der beiden Elektroden 10 der Mikrohohlfaser, die als Anode oder Kathode ausgebildet sein kann. Die Eletrode 10 der Mikrohohlfaser steht in direktem Kontakt mit der entsprechenden Elektrode 9, die am Rahmenumfang aufgebracht ist. Von der anderen der beiden Mikrohohlfaserelektroden (nicht gezeigt), die auf der Innenoberfläche der Mikrohohlfaser angebracht ist, führt eine Leitung aus dem Diskusscheibenring hinaus zur zweiten Elektrode 8 des Diskusscheibenringes.

Wenn die Anoden auf den Innenoberflächen der Mikrohohlfasern angeordnet sind, entsteht das Produkt der elektrochemischen Reaktion auf den Außenoberflächen der Fasern, die die Kathode bilden. In diesem Fall wird der Kathodenkontakt zum Gehäuse direkt erreicht, und das Oxidationsmittel, bzw. die Luft, wird durch die Mikroholfaserlagen gefiltert.

Der erfindungsgemäße Brennstoffzellenstack ist unter anderem als atmosphärische Brennstoffzelle mit geschlossener Brennstoffzuführung und offener Abführung des Reaktionsproduktes, z.B. Wasser, einsetzbar. Er kann des weiteren sowohl im Unter- als auch im Überdruckverfahren betrieben werden, wobei sich die erste Variante insbesondere fiir die Einsatz in einem Kraftfahrzeug eignet, gemäß dem der Fahrtwind den Unterdruck im Brennstoffzellenstack gewährleistet. Die einzelnen Mikrohohlfasern sind selbsttragend und dank ihrer textilen Eigenschaften äußerst flexibel und widerstandsfähig. Aufgrund der dünnen Wandstärken der Mikrohohlfaserelektrolyten können niedrige Anspringtemperaturen verwirklicht werden. Die erfindungsgemäßen Mikrohohlfasern lassen sich mit einer Genauigkeit von etwa ± 6% in bezug auf die Schwankungen des Außendurchmessers und der Wandstärke herstellen, so daß eine konstante Betriebsweise gewährleistet wird.

Die im Rahmen der Anwendung des erfindungsgemäßen Brennstoffzellenstacks beschriebene Einspritzdüse eignet sich auch für den Einsatz in anderen Bereichen, insbesondere im Zusammenhang mit Otto- oder Dieselmotoren, in Carnot-Kreisprozessen oder anderen ähnlichen Prozessen bzw. Maschinen.

## Patentansprüche

1. Brennstoffzelleneinheit zur Gleichstromerzeugung durch Umwandlung chemischer Energie mit einem Elektrolyten, welcher getrennt voneinander Anode und Kathode trägt, **dadurch gekennzeichnet, daß**
a) der Elektrolyt eine Mikrohohlfaser-Matrixelektrolyt ist, dessen inneren bzw. äußeren Oberflächen als Anode oder Kathode aktiviert sind,
b) die Mikrohohlfasern (2) des Elektrolyten eine Wandstärke von etwa 0,01 bis 50µm und einen gleichwertigen Außendurchmesser von etwa 0,05 bis 280 µm aufweisen,
c) die Mikrohohlfasern entweder in Form von Filament- oder Filamentgarngelegen angeordnet sind, wobei die Mikrohohlfaserenden (3) formstabil gebunden sind und für den Zugang zum Hohlfaserlumen zumindest partiell freigelegt sind, oder in Form von Stapelfaser- oder Stapelfasergamgelegen angeordnet sind, wobei die Mikrohohlfaserenden (3) formstabil gebunden sind,
wobei die Gelege in Form einer Diskusscheibe angeordnet sind, wobei die Mikrohohlfaserenden so eingebunden sind, daß ein stabiler, selbsttragender Diskusscheibenring gebildet ist, an dessen äußerer ringförmiger Umfangsfläche die offenen Mikrohohlfaserenden freiliegen oder
wobei die Gelege in Form eines Vielecks, insbesondere eines Rechtecks, angeordnet sind, wobei die Mikrohohlfaserenden so eingebunden sind, daß ein stabiler, selbsttragender, vieleckiger, insbesondere rechteckiger, Rahmen gebildet ist, an dessen äußerer Umfangsfläche die offenen Mikroholfaserenden freiliegen.

2. Brennstoffzelleneinheit nach Anspruch 1, **dadurch gekennzeichnet, daß** die Wandstärke der Mikrohohlfasern zwischen etwa 0,05 und 10 µm insbesondere zwischen etwa 0,05 und 5 µm, liegt.

3. Brennstoffzelleneinheit nach Anspruch 1 oder 2, **dadurch gekennzeichnet, daß** der gleichwertige Außendurchmesser der Mikrohohlfasern zwischen etwa 1 und 100 µm, insbesondere zwischen etwa 2 und 25 µm, liegt.

4. Brennstoffzelleneinheit nach mindestens einem der vorhergehenden Ansprüche, **dadurch gekennzeichnet, daß** die Mikrohohlfasern (2) aus Polymermaterialien, Metall, Keramik und/oder textilen Materialien bestehen.

5. Brennstoffzelleneinheit nach mindestens einem der vorhergehenden Ansprüche, **dadurch gekennzeichnet, daß** die Brennstoffzelleneinheit als PEM-, DM- oder SO-Brennstoffzelleneinheit vorliegt.

6. Brennstoffzelleneinheit nach mindestens einem der vorhergehenden Ansprüche, **dadurch gekennzeichnet, daß** die Anode an der Lumeninnenfläche der Mikrohohlfasern vorliegt.

7. Brennstoffzelleneinheit nach mindestens einem der vorhergehenden Ansprüche 1 bis 5, **dadurch gekennzeichnet, daß** die Anode an der Außenumfangsoberfläche der Mikrohohlfasern (2) vorliegt.

8. Brennstoffzelleneinheit nach mindestens einem der vorhergehenden Ansprüche, **dadurch gekennzeichnet, daß** sie mit einem Mikrowellenabschirmkäfig versehen ist.

9. Brennstoffzelleneinheit nach mindestens einem der vorhergehenden Ansprüche, **dadurch gekennzeichnet, daß** ein Kurzschlußschutz in Form von Wendelfasern mit nicht aktivierter Oberfläche vorliegt, die die Mikrohohlfasern umschlingen und mit deren Enden fest verbunden sind.

10. Brennstoffzellenstack (1), der mehrere Brennstoffzelleneinheiten nach mindestens einem der vorhergehenden Ansprüche enthält.

11. Brennstoffzellenstack nach Anspruch 10, **dadurch gekennzeichnet, daß** die einzelnen Brennstoffzelleneinheiten wellenförmig oder stegplattenförmig ausgebildet sind.

12. Brennstoffzellenstack nach Anspruch 10 oder 11, **dadurch gekennzeichnet, daß** er mindestens eine Brennstoffzelleneinheit mit nicht aktivierten Elektrodenoberflächen als Wärmetauscher und/oder Luftfilter aufweist.

13. Verwendung mindestens einer Brennstoffzelleneinheit bzw. eines Brennstoffzellenstacks nach einem der vorhergehenden Ansprüche 1 bis 12 zur Gleichstromerzeugung durch Umwandlung der bei der Oxidation eines Brennstoffes freigesetzten chemischen Energie, **dadurch gekennzeichnet, daß** die Stoffströme des Brennstoffes und des Oxidationsmittels als Kreuzströme geführt werden.

14. Verwendung nach Anspruch 13, **dadurch gekennzeichnet, daß** ein wasserstoffhaltiger Brennstoff verwendet wird.

15. Verwendung nach Anspruch 13 oder 14, **dadurch gekennzeichnet, daß** die elektrochemischen Oxidationsprodukte zum Konditionieren, Heizen, Kühlen und/oder Befeuchten der Brennstoffzelleneinheit oder anderer nachfolgender Sequenzen, insbesondere nachfolgender Brennstoffzelleneinheitsequenzen benutzt werden.

16. Verwendung nach mindestens einem der Ansprüche 13 bis 15, **dadurch gekennzeichnet, daß** die Elektrolyt-Anspringtemperatur mittels Durchfluß von Heizmedien durch die mindestens eine Brennstoffzelleneinheit bzw. den Brennstoffzellenstack in einem der Zweige der Kreuzströme erreicht wird.

17. Verwendung nach mindestens einem der Ansprüche 13 bis 15, **dadurch gekennzeichnet, daß** die Elektrolyt-Anspringtemperatur durch Erhitzen des Brennstoffes und/oder des Oxidationsmittels vor dem Einleiten in die Brennstoffzelleneinheit erreicht wird.

18. Verwendung nach Anspruch 16 oder 17, **dadurch gekennzeichnet, daß** die zum Erhitzen des Brennstoffes, des Oxidationsmittels oder des Heizmediums benötigte Wärme durch Wässerung von Zeolith erhalten wird.

19. Verwendung nach Anspruch 16, **dadurch gekennzeichnet, daß** die Elektrolyt-Anspringtemperatur durch Wässerung eines Metallhydrids, insbesondere von Eisen-, Titanoder Magnesiumhydrid, erreicht wird.

20. Verwendung nach Anspruch 18 oder 19, **dadurch gekennzeichnet, daß** das Endprodukt der elektrochemischen Reaktion für die Wässerung verwendet wird.

21. Verwendung nach Anspruch 16, **dadurch gekennzeichnet, daß** die Elektrolyt-Anspringtemperatur durch direktes oder indirektes Umwälzen von Metall- oder Bariumhydroxid-Schmelzen erreicht wird.

22. Verwendung nach mindestens einem der Ansprüche 13 bis 21, **dadurch gekennzeichnet, daß** die Elektrolyt-Anspringtemperatur durch Bestrahlen der Brennstoffzelleneinheit mit Mikrowellen erreicht wird.

23. Verwendung nach mindestens einem der Ansprüche 13 bis 22, **dadurch gekennzeichnet, daß** die Elektrolyt-Anspringtemperatur mit einem atmosphärischen Katalysatorenbrenner erreicht wird.

24. Verwendung nach mindestens einem der Ansprüche 13 bis 23, **dadurch gekennzeichnet, daß** die Brennstoffeinspritzung über Düsen erfolgt, deren Öffnungen als Mikrohohlfaserlumen ausgebildet sind, die einen Durchmesser von 0,1µm bis 100µm aufweisen und in den Guß- oder Spritzgußteilen der Düse verloren eingebracht sind.

## Claims

1. Fuel cell unit for generating a direct current by transforming chemical energy by means of an electrolyte having an anode and a cathode separated from one another, **characterized in that**
a) the electrolyte is a micro hollow fibre matrix electrolyte whose inner and/or outer surfaces are activated as an anode or cathode,
b) the micro hollow fibres (2) of the electrolyte have a wall thickness of approx. 0.01 µm to 50 µm and an equivalent outer diameter of approx. 0.05 µm to 280 µm,
c) the micro hollow fibres are arranged either in the form of a filament or filament yarn fabric, the endings of the micro hollow fibres (3) being form stably bound and are laid open at least in part for access to the hollow fibre lumen, or are arranged in the form of staple fibre fabrics or staple fibre yarn fabrics, the endings of the micro hollow fibres (3) being form stably bound,
the fabrics being arranged in the shape of a disk with the endings of the micro hollow fibres being bound in such a way that they form a stable self-supporting disk ring on whose external ring-shaped circumferential surface the open micro hollow fibre endings are exposed, or
the fabrics being arranged in the shape of a polygon, in particular of a rectangle, the micro hollow fibres being bound in such a way as to form a polygonal, particularly rectangular frame on whose outer perimeter the open endings of the micro hollow fibres are exposed.

2. Fuel cell unit according to Claim 1, **characterized in that** the wall thickness of the micro hollow fibres is between approx. 0.05 µm and 10 µm, particularly between 0.05 µm and 5 µm.

3. Fuel cell unit according to Claim 1 or 2, **characterized in that** the equivalent outer diameter of the micro hollow fibres is between 1 µm and 100 µm, particularly between 2 µm and 25 µm.

4. Fuel cell unit according to at least one of the preceding claims, **characterized in that** the micro hollow fibres (2) are made of polymer materials, metal, ceramics and/or textile materials.

5. Fuel cell unit according to at least one of the preceding claims, **characterized in that** the fuel cell unit is a PEM, DM or SO fuel cell unit.

6. Fuel cell unit according to at least one of the preceding claims, **characterized in that** the anode is located on the inner lumen surface of the micro hollow fibres.

7. Fuel cell unit according to at least one of the preceding Claims 1 to 5, **characterized in that** the anode is provided on the outer perimeter surface of the micro hollow fibres (2).

8. Fuel cell unit according to at least one of the preceding claims, **characterized in that** it has a microwave shield.

9. Fuel cell unit according to at least one of the preceding claims, **characterized in that** it has short circuit protection in the form of helicoidal fibres with non-activated surface wrapped around the micro hollow fibres and firmly attached to their endings.

10. Fuel cell stack (1) comprising several fuel cell units according to at least one of the preceding claims.

11. Fuel cell stack according to Claim 10, **characterized in that** the individual fuel cell units are in the shape of corrugated or web plates.

12. Fuel cell stack according to Claim 10 or 11, **characterized in that** it has at least one fuel cell unit with non-activated electrode surfaces as heat exchangers and/or air filters.

13. Utilization of at least one fuel cell unit and/or fuel cell stack according to one of the preceding Claims 1 to 12 for generating a direct current through transformation of chemical energy released during oxidation of fuel, **characterized in that** the material flows of the fuel and oxidation agent are made to cross one another.

14. Utilization according to Claim 13, **characterized in that** fuel containing hydrogen is utilized.

15. Utilization according to Claim 13 or 14, **characterized in that** the electrochemical oxidation products are utilized for conditioning, heating, cooling and/or moisturizing the fuel cell unit or the other following sequences, particularly the following fuel cell unit sequences.

16. Utilization according to at least one of the preceding Claims 13 to 15, **characterized in that** the electrolyte starting temperature is obtained by means of the throughflow of heating media through at least one fuel cell unit and/or the fuel cell stack in one of the branches of the crossflows.

17. Utilization according to at least one of the preceding Claims 13 to 15, **characterized in that** the electrolyte starting temperature is obtained by heating the fuel and/or the oxidation agent before feeding it/them into the fuel cell unit.

18. Utilization according to Claim 16 or 17, **characterized in that** the heat required for heating the fuel, oxidation agent or heating medium is obtained through applying water to a zeolith.

19. Utilization according to Claim 16, **characterized in that** the electrolyte starting temperature is obtained by applying water to a metal hydride, in particular an iron, titanium, or magnesium hydride.

20. Utilization according to Claim 18 or 19, **characterized in that** the end product of the electrochemical reaction is utilized for applying the water.

21. Utilization according to Claim 16, **characterized in that** the electrolyte starting temperature is obtained by direct or indirect circulation of molten metal or bariumhydroxide electrolytes.

22. Utilization according to at least one of Claims 13 to 21, **characterized in that** the electrolyte starting temperature is obtained by radiating the fuel cell unit with microwaves.

23. Utilization according to Claims 13 to 22, **characterized in that** the electrolyte starting temperature is obtained by means of an atmospheric catalytic burner.

24. Utilization according to at least one of Claims 13 to 23, **characterized in that** the fuel injection occurs through jets whose openings are formed as micro hollow fibre lumens with a diameter of 0.1 µm to 100 µm and embedded in the moulded or injection moulded parts of the jet in a non-recoverable manner.

## Revendications

1. Unité de cellules à combustible pour produire un courant direct par la transformation d'énergie chimique à l'aide d'un électrolyte portant une anode et une cathode séparées l'une de l'autre, **caractérisée en ce que**
a) l'électrolyte est un électrolyte à matrice à microfibres creuses dont les surfaces internes et externes sont activées comme anode ou cathode,
b) les microfibres creuses (2) de l'électrolyte ont une épaisseur de paroi d'environ 0,01 µm à 50 µm et un diamètre équivalent d'environ 0,05 µm à 280 µm,
c) les microfibres creuses sont disposées soit sous forme de tissus monofil ou multifil, les bouts (3) des microfibres creuses étant liés en forme stable et étant exposés du moins partiellement pour permettre l'accès au lumen desdites microfibres creuses, ou sont arrangées sous forme de tissus de fibres discontinues monofil or multifil, lesdits bouts (3) des microfibres creuses étant liés en forme stable,
lesdits tissus étant arrangés sous forme de disque avec les bouts des microfibres creuses intégrés de façon à former un anneau de disque stable autoportant, avec les bouts ouverts des microfibres creuses exposés à sa surface externe en forme d'anneau, ou
lesdits tissus étant arrangés sous forme d'un polygone, en particulier d'un rectangle, avec les microfibres creuses intégrées de façon à former un cadre stable, autoportant, polygone, en particulier rectangulaire, portant les bouts ouverts des microfibres creuses exposés à sa surface externe.

2. Unité de cellules à combustible selon la revendication 1, **caractérisée en ce que** l'épaisseur de paroi des microfibres creuses est comprise entre environ 0,05 µm et 10 µm, plus particulièrement entre 0,05 µm et 5 µm.

3. Unité de cellules à combustible selon la revendication 1 ou 2, **caractérisée en ce que** le diamètre externe équivalent des microfibres creuses est compris entre environ 1 µm et 100 µm, plus particulièrement entre environ 2 µm et 25 µm.

4. Unité de cellules à combustible selon au moins une quelconque des revendications précédentes, **caractérisée en ce que** les microfibres creuses (2) sont faites en matériaux polymères, métal, céramique et/ou matières textiles.

5. Unité de cellules à combustible selon au moins une quelconque des revendications précédentes, **caractérisée en ce que** l'unité de cellules à combustible est disponible sous forme d'unité de cellules à combustible PEM, DM ou SO.

6. Unité de cellules à combustible selon au moins une quelconque des revendications précédentes, **caractérisée en ce que** l'anode se trouve sur la surface interne du lumen des microfibres creuses.

7. Unité de cellules à combustible selon au moins une quelconque des revendications précédentes 1 à 5, **caractérisée en ce que** l'anode se trouve sur la surface circonférentielle externe des microfibres creuses (2).

8. Unité de cellules à combustible selon au moins une quelconque des revendications précédentes, **caractérisée en ce qu'**elle est dotée d'un écran d'interception des microondes.

9. Unité de cellules à combustible selon au moins une quelconque des revendications précédentes, **caractérisée en ce qu'**elle dispose d 'une protection court-circuit sous forme de fibres hélicoidales à surface non-activée enlaçant les microfibres creuses et étant solidement liées avec leurs bouts.

10. Pile à combustible (1) comprenant plusieurs unités de cellules à combustible selon au moins une quelconque des revendications précédentes.

11. Pile à combustible selon la revendication 10, **caractérisée en ce que** les unités de cellules à combustible sont des plaques ondulées ou alvéolaires.

12. Pile de cellules à combustible selon la revendication 10 ou 11, **caractérisée en ce qu'**elle dispose d'au moins une unité de cellules à combustible ayant des surfaces d'électrodes non-activées comme échangeur de chaleur et/ou filtre à air.

13. Utilisation d'au moins une unité de cellules à combustible ou d'une pile à combustible selon l'une quelconque des revendications précédentes 1 à 12 pour produire un courant direct par la transformation de l'énergie chimique dégagée lors de l'oxydation d'un combustible, **caractérisée en ce que** les flux du combustible et de l'agent d'oxydation sont agencés comme flux croisés.

14. Utilisation selon la revendication 13, **caractérisée en ce qu'**on utilise un combustible contenant de l'hydrogène.

15. Utilisation selon la revendication 13 ou 14, **caractérisée en ce que** les produits d'oxydation électrochimiques sont utilisés pour conditionner, chauffer, refroidir et/ou humidifier l'unité de cellules à combustible ou les autres séquences suivantes, en particulier des séquences d'unités de cellules à combustible suivantes.

16. Utilisation selon au moins une quelconque des revendications 13 à 15, **caractérisée en ce que** la température d'amorçage de l'électrolyte est obtenue par le passage de moyens de chauffage à travers au moins une des unités de cellules à combustible ou la pile à combustible dans l'une des branches des flux croisés.

17. Utilisation selon au moins une quelconque des revendications 13 à 15, **caractérisée en ce que** la température d'amorçage de l'électrolyte est obtenue par le réchauffement du combustible et/ou du moyen d'oxydation avant son introduction dans l'unité de cellules à combustible.

18. Utilisation selon la revendication 16 ou 17, **caractérisée en ce que** la chaleur requise pour réchauffer le combustible, le moyen d'oxydation ou le moyen de chauffage est obtenue par l'arrosage d'un zéolithe.

19. Utilisation selon la revendication 16, **caractérisée en ce que** la température d'amorçage de l'électrolyte est obtenue par l'arrosage de l'hydrure métallique, en particulier de l'hydrure de fer, de titane ou de magnésium.

20. Utilisation selon la revendication 18 ou 19, **caractérisée en ce que** le produit final de la réaction électrochimique est utilisé pour l'arrosage.

21. Utilisation selon la revendication 16, **caractérisée en ce que** la température d'amorçage de l'électrolyte est obtenue par la circulation directe ou indirecte d'électrolytes fondus comme l'hydroxyde de métal ou de barium.

22. Utilisation selon au moins une quelconque des revendication 13 à 21, **caractérisée en ce que** la température d'amorçage de l'électrolyte est obtenue par l'irradiation de l'unité de cellules à combustible par des microondes.

23. Utilisation selon au moins une quelconque des revendications 13 à 22, **caractérisée en ce que** la température d'amorçage de l'électrolyte est obtenue à l'aide d'un brûleur catalytique atmosphérique.

24. Utilisation selon au moins une quelconque des revendications 13 à 23, **caractérisée en ce que** l'injection du combustible se fait par des jets dont les orifices ont la forme d'un lumen de microfibres creuses qui ont un diamètre de 0,1 µm à 100 µm et sont incorporées dans les pièces moulées ou injectées du jet de façon non-récupérable.
